# EUROPEAN PATENT SPECIFICATION

(11) **EP 1 492 974 B1**
(45) Date of publication and mention of the grant of the patent: **09.07.2008**
(21) Application number: 03745366.9
(22) Date of filing: 28.03.2003
(51) Int. Cl.: F16L 3/26

(54) **SUPPORT DEVICE OF TECHNOLOGICAL SYSTEM FOR WALLS**
STÜTZVORRICHTUNG FÜR TECHNOLOGISCHES SYSTEM FÜR WÄNDE
DISPOSITIF DE SUPPORT DE SYSTEME TECHNOLOGIQUE POUR PAROIS

(30) Priority: 29.03.2002 IT PS20020007
(43) Date of publication of application: 05.01.2005
(73) Proprietor: MEZZANOTTI, Fausto, I-61025 Montelabbate (IT)
(72) Inventor: MEZZANOTTI, Fausto, I-61025 Montelabbate (IT)
(74) Representative: Negrini, Elena
(86) International application number: PCT/IB2003/001171
(87) International publication number: WO 2003/083340

(56) References cited:
- DE-C- 846 713
- FR-A- 1 248 161
- US-A- 5 470 021

## Description

### TECHNICAL FIELD

The present invention relates to supports for installations, fittings and technological systems, as electric, communication, data networks, compressed air or vacuum piping, plumbing and the like, particularly the present invention refers to a support device of technological systems for walls.

Said walls are carried out by a first layer of plasterboard plates or similar and by a second layer in masonry or also made of plates and they have an interspace fit for housing technological systems provided with connection elements, such as cables, wirings, data and communication lines, ducts or similar, and provide with interconnection elements, such as switches, sockets, connections, controls, valves and similar, within reach of user.

### BACKGROUND ART

Some kind of known devices for supporting technological systems consist of simple flexible hoses for connection elements and of fixing means, consisting of boxes, each one fixed inside the plates in which it is carried out a respective housing hole for the interconnection element, locked to the said box.

In an assembled condition of said known devices some hoses flow into said boxes provided for accommodating and fixing the system interconnection elements.

Furthermore there are known devices including plastic or metallic section bars fixed to the plates which support said section bars inside said interspace, carrying out a support for the connection elements. Such a device is known from DE 846 713.

Said known devices have openings or end close to boxes fixed to plates.

The main drawback of said known devices consists in that they include boxes whose fixing to the wall plates is weak and subject to breakings or is very complicated and difficult.

Other drawback of said known devices consists in that they interfere with the support uprights of the plates causing installation difficulty and, sometimes, weakening the wall structure.

Further drawback of said known devices consists in that they do not allow or make very difficult the installation of additional boxes for interconnection elements after the wall construction, so making the extension or the integration of the technological systems very difficult and expensive.

### DISCLOSURE OF THE INVENTION

The main object of the present invention is to propose a support device of technological systems for walls, which allows fixing easily, quickly and safely to the wall system interconnection elements, such as switches, sockets, cutouts and controls.

Further object is to propose a device fit for supporting both systems and wall plates.

The above-mentioned objects are achieved according to the content of claim 1.

### BRIEF DESCRIPTION OF THE DRAWINGS

The characteristics of the invention are underlined in the following, with particular reference to the attached drawings, in which:
- figure 1 show a front view of the device object of the present invention associated to a wall, in an assemblage condition, and in which some elements have been removed for better underlining others;
- figures 2 and 3 show respectively a side and a front view of a first section bar means of the figure 1 device;
- figures 4 and 5 show respectively a front and a side view of fixing means of figure 1 device;
- figures 6 and 7 show axonometric views of respective second section bar means of figure 1 device;
- figures 8 and 9 show respectively an axonometric view and side view of joint means of figure 1 device;
- figures 10 and 11 show respectively an axonometric and a side view of further joint means of figure 1 device;
- figure 12 shows a plan view of a support means of figure 1 device in a flattened condition;
- figure 13 shows a side view of the support means of figure 12 in an upright condition;
- figure 14 shows a side view of two support means of figure 13 associated to second section bar means of figures 6 and 7;
- figures 15 and 16 show respectively front and side views of a linking element of figure 1 device;
- figures 17 and 18 show respectively front and plan views of a deviation means of figure 1 device;
- figures 19 and 20 show partial views in section of elements of figure 1 in conditions of mutual association;
- figures 21 and 22 show partial and front views of elements of figure 1 in mutual association;
- figures 23 and 24 show respectively front and side views of a variant of the fixing means of figure 4;
- figure 25 shows a section partial view of elements of figures 1 and 23 in conditions of mutual association.

### BEST MODE OF CARRYING OUT THE INVENTION

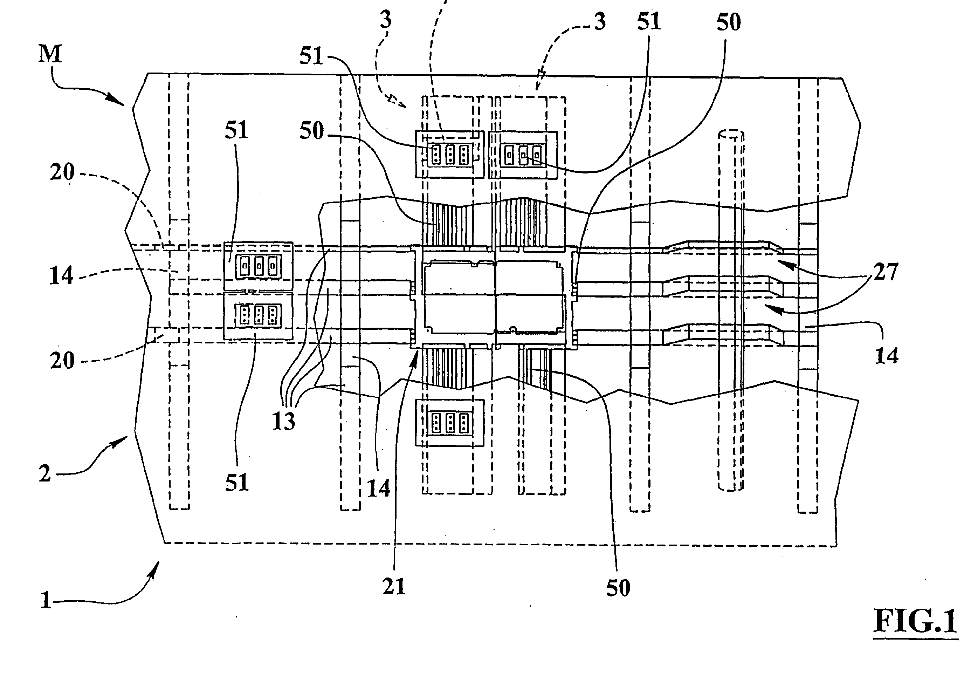

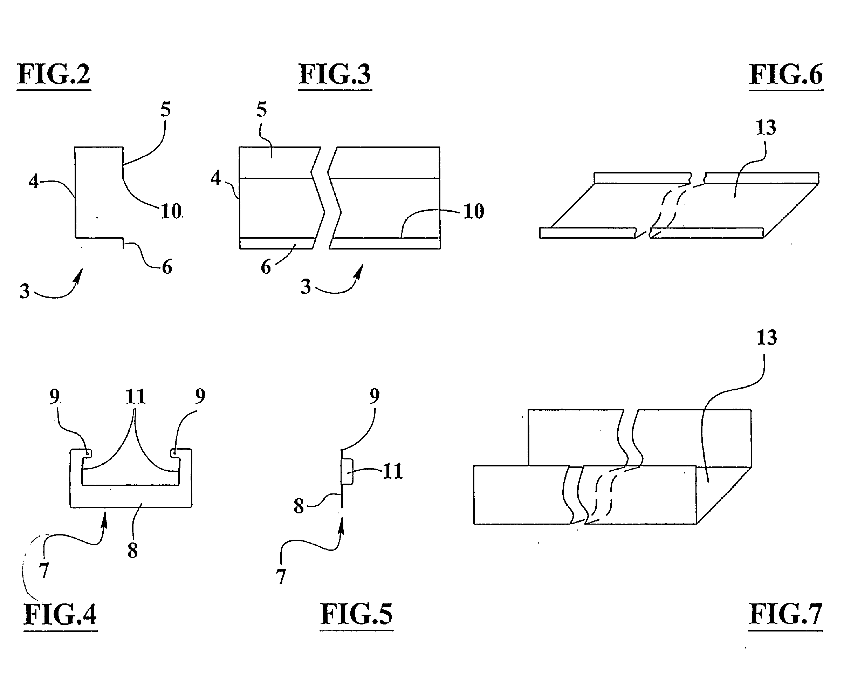

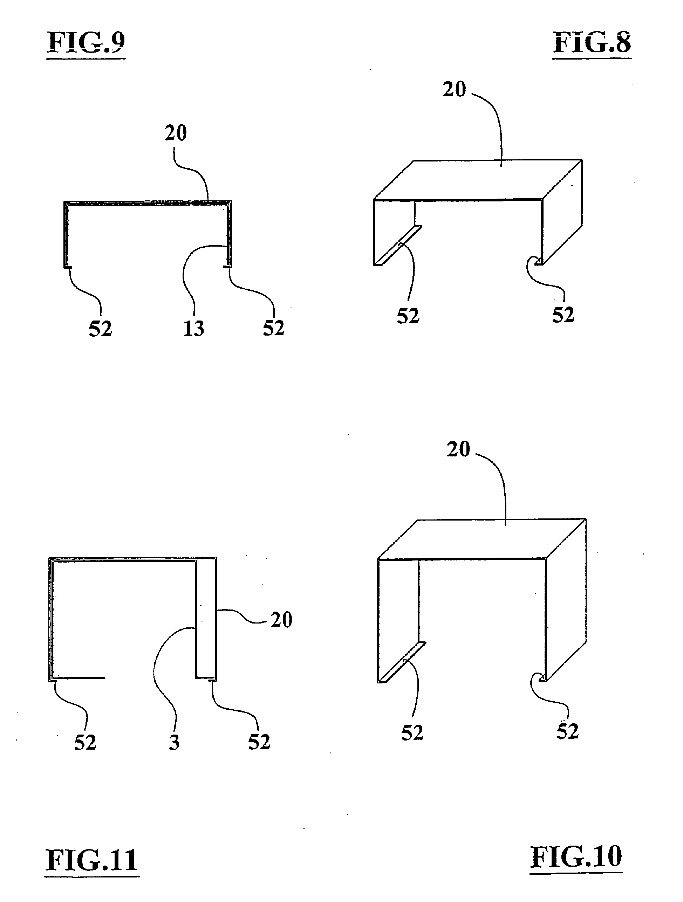

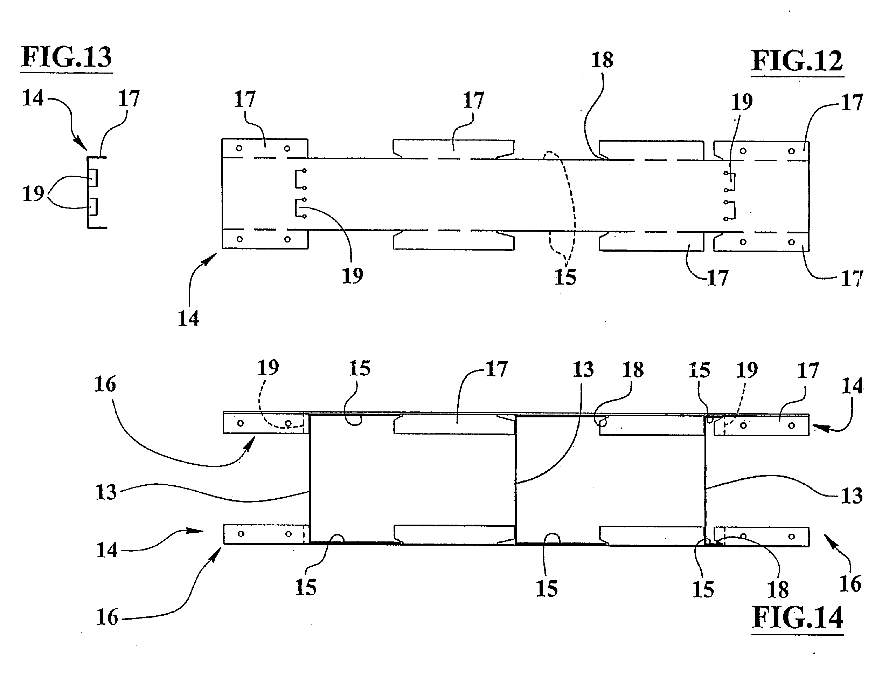

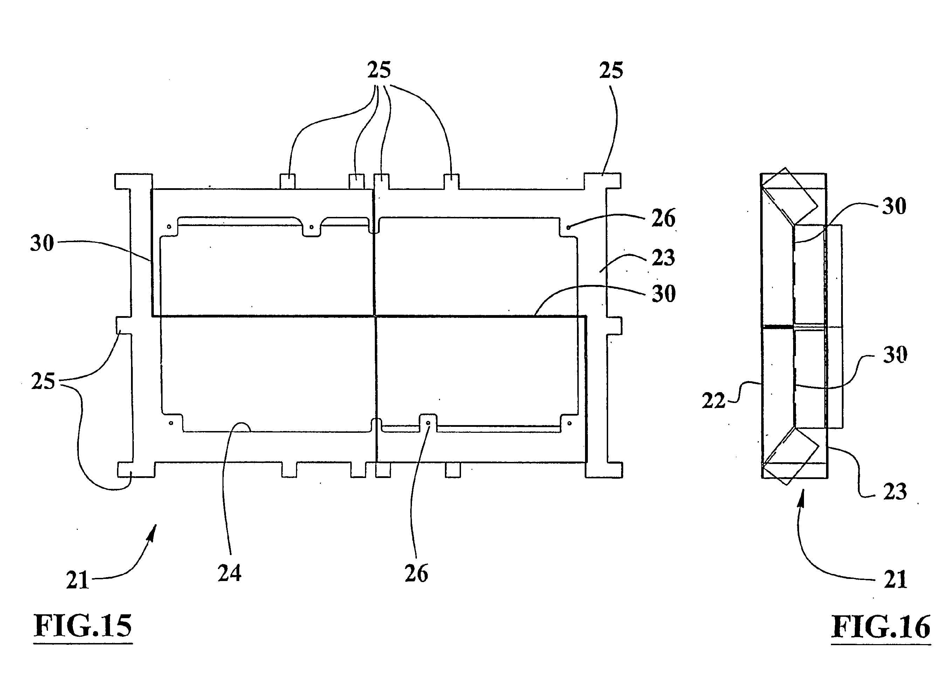

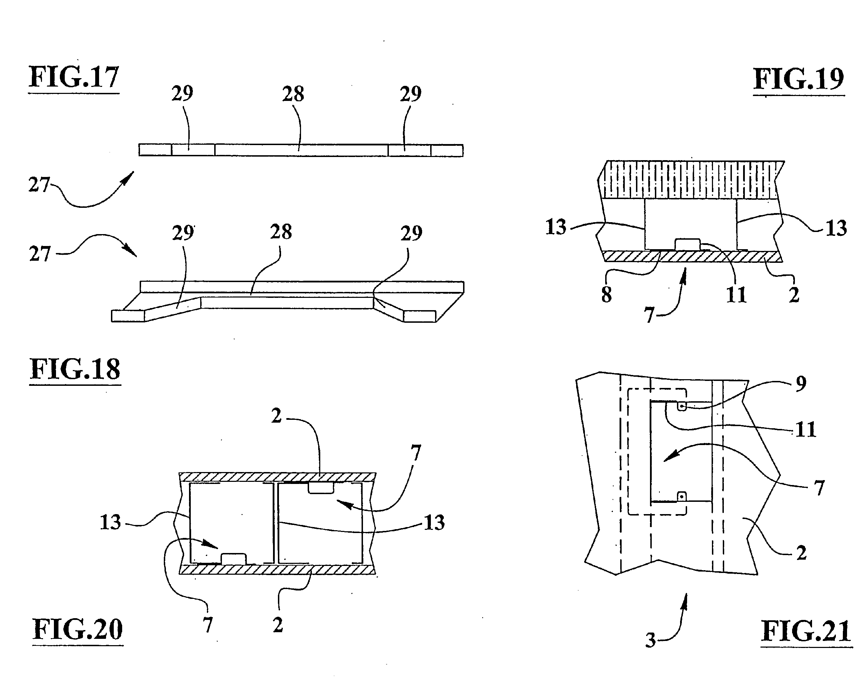

With reference to figures 1 to 22, numeral 1 indicates the support device of technological systems for walls provided with a layer of plasterboards plates 2 or similar and with a second layer made of the same material or in masonry.

The technological systems include connection elements 50, such as cables, wirings, data and communications lines, ducts and similar, and interconnection elements 51, such as switches, sockets, connections, controls, valves and similar, within reach of user.

The device 1 include a plurality of first section bar means 3 and second section bar means 13 for supporting connection elements 50, a plurality of fixing means 7 for interconnection elements 51, of joint means 20 for section bar means 3, 13, of support means 14 for second section bar means 13 and of linking elements 21 for the section bar means, first 3 and second 13.

The first section bar means 3 have extended shape and each of them includes a first element 4 with "C" cross section, whose edges have respective folded borders first 5 and second 6, defining a longitudinal opening 10 of the section bar means 3.

The first border 5 of each first section bar means 3 has width greater than the width of the respective second border 6 and it is bent toward the latter, which vice versa is bent in the opposite direction.

The borders 5, 6 of each first section means 3 are coplanar in order to offer a wide abutment surface for plates 2 of wall.

The second border 6 supports respective wall plates 2 by screw means, for instance of self-tapping type, whose tips don not interfere with the connection elements 50, positioned in the first element 4, being external to the latter.

The second section bar means 13 are extended, have "C" cross section and they are fit to contain and to support the connection elements 50 of the system or to support the plates through the screw means fixed to the respective side portions.

The fixing means 7 have an approximately "U" shaped plan and each of them is provided with first lip means 8 and, in correspondence of the respective ends, with first blocking means 9 consisting of female screws.

In an assembled condition M, the first lip means 8 are inserted between the plates 2 and the first border 5 of the first section bar means 3 or the side portion of the second section bar means 13. The first blocking means 9 are at a mutual distance equal to that one of the corresponding fixing holes of the interconnection elements 51, for blocking through screws these last ones to the fixing means 7 and thus to the wall.

Each fixing means 7 has two abutment means 11 fit for mating one or two edges of the first section bar means 3 in order to define the position with respect to the latter of the first blocking means 9.

Each abutment means 11 consists of a fin bent almost perpendicularly with respect to a plane defined by the fixing means 7.

The first section bar means 3 and the fixing means 7 have different dimensions for different assemblies, horizontal and vertical and for different types of technological systems.

The fixing means 7 fit for fixing the interconnection elements 51 longitudinally with respect to the first section bar means 3 have the maximum distance between the abutment means 11 and the first blocking means 9 approximately equivalent to half of the width of longitudinal opening 10 of first section bar means 3.

The fixing means 7 fit for fixing the interconnection elements 51 transversally with respect to the first section bar means 3 have a mutual distance between the abutment means 11 approximately equal to the width of the longitudinal opening 10 of first section bar means 3.

The joint means 20 substantially consist of portions of section bars having an inner shape which approximately copy the external shape of respective section bar means 3, 13 and they are fit for mutually joint the ends of these last ones.

The joint means 20 have, in correspondence of the longitudinal edges, inwards turned folds 52 fit for holding the section bar means 3 13.

The support means 14 are fit to support the second section bar means 13, horizontally positioned, and they are carried out by die cutting a sheet and folding the latter in order to raise the folded fin means 17, sideways carried out, and shoulder means 19, centrally carried out.

The fin means 17 carry out three housings 15, for corresponding side portions of respective horizontal second section bar means 13, and they realize connection means 16 carried out at the ends of the support means 14, fit for fixing, through screws, ends of second section bar means 13, vertically positioned.

In the assembled condition M, these last ends mate with the shoulder means 19 of connection means 16.

The fin means 17, fit for mating with a longitudinal edge of the horizontal second section bar means 13, have a cavity 18 for the sliding fix of such edge.

The linking elements 21 are fit for mating and end of two first section bar means 3, vertically positioned, and two second section bar means 13, horizontally positioned, in correspondence of intersections between these last means 3, 13 and they include a first face 22 and a second face 23 almost parallel.

This last face has two windows 24 corresponding, in the assembled condition M, to respective openings of plates 2 and has a plurality of second blocking means 26 fit for removably fixing, by screws, cover means of the windows 24, consisting of covers made of plastic material or carried out in the same material of the plates.

An inside face of each cover, which is fit to mate the related linking element 21, has an arrangement consisting of a label or of a proper surface fit for the writing, for data regarding at least the position, for instance the direction, right, left, high and low and the distance, of the first section bar means 3 with respect to the center of the linking element 21.

The faces, first 22 and second 23, have a plurality of protrusions 25 for mating respective portions of the ends of section bar means first 3 and second 13.

The faces first 22 and second 23 are reciprocally fixed through two separation means 30, each one having baffles for separating the paths of the connection elements 50.

It is provided that the linking elements 21 can also be shaped for different quantity of section bar means 3, 13 and they can have different quantities of separation means 30.

The second section bar means 13 include respective set of deviation means 27 having a narrow portion 28 and two respective union portions 29.

The narrow portion 28 allows the intersection with preexisting elements or unrelated elements to the systems supported by the device 1.

In the assembled condition M of device 1, the section bar means first 3 and second 13 collaborate for containing and supporting the connection elements 50 and for supporting one or two layers of plates 2 of the wall.

The fixing means 7 fix the interconnection elements 51 into respective openings of a wall layer and longitudinal openings 10 of the section bar means 3.

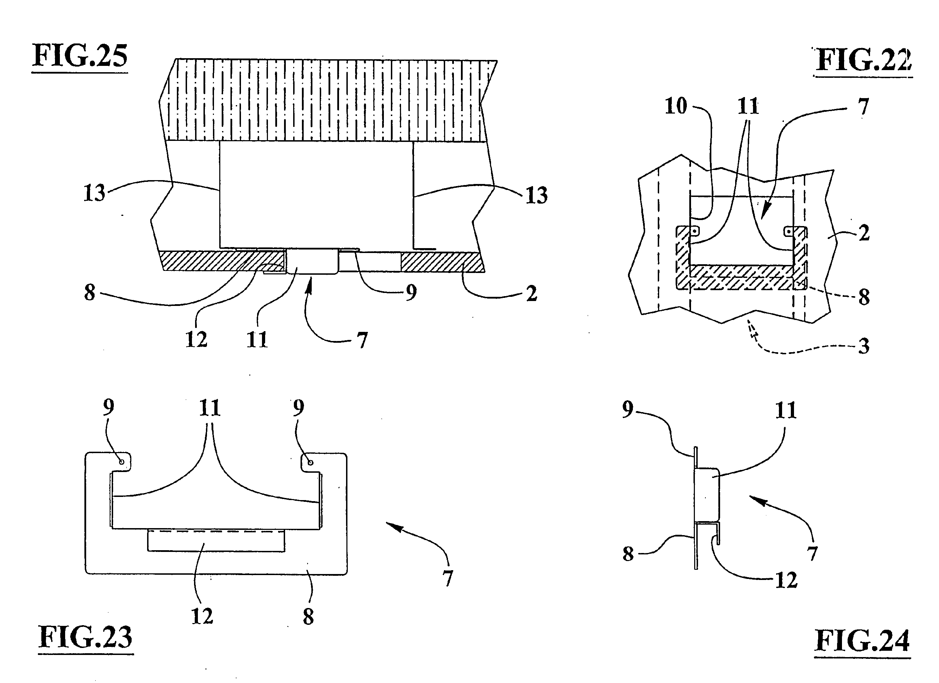

The fixing means 7 of the variant of figures 23 to 25 have a seat 12 for an edge of a wall plate 2.

The seat 12 consists of a "L" folded portion of an edge of first lip means 8, turned toward the first blocking means 9, and it allows to improve the fixing to plates 2.

It is provided that the means and elements of device 1 are made of bent or punched and bent metallic sheet preferably made of galvanized ferrous material.

It is important to observe that the device allows to advantageously and simply fix, after the assemblage of the finished wall, further fixing means 7 for additional interconnection elements 51.
In fact, it is sufficient to carry out a suitable hole in the plates on the longitudinal opening 10 of a section bar means 3 to be allowed to interpose, between the latter and the plates, an additional fixing means 7 without the need to enter into the wall interspace.

The position of the longitudinal opening 10 of the section bar means 3 can be advantageously located, also in absence of interconnection elements 51, fixed to the section bar means 3, through the position data of the latter reproduced in the covers of the linking elements 21.

The main advantage of the present invention is to provide a support device of technological systems for walls, fit to allow fixing system interconnection elements, such as switches, sockets, cutouts and controls, to the wall in an easy, quick and safe way and fit to support both system and wall plates.

## Claims

1. Support device of technological systems comprising walls provided with at least a layer of plates (2),
- first section bar means (3), having an elongated shape, each one including a first element (4) with "C" cross section whose edges have first (5) and second (6) folded borders defining a longitudinal opening (10) of the first section bar means (3); said device being **characterized in that** it further includes
- fixing means (7) each one provided with at least first lip means (8) and first blocking means (9);
in an assembled condition (M) of device (1), the first section bar means (3) contain and support connection elements (50) of the technological system by respective first elements (4) at least one border (5, 6) of which supports plates (2) of the wall layer, the first lip means (8) of the fixing means (7) are interposed between at least a folded edge (5, 6) of the first section bar means (3) and said plates (2) and the first blocking means (9) fix technological system interconnection elements (51) to respective openings of the wall layer and to longitudinal openings (10) of first section bar means (3).

2. Device according to claim 1 **characterized in that** the first border (5) of each first section bar means (3) is bent toward the respective second border (6) and the latter is bent in the opposite direction.

3. Device according to claim 1 or claim 2 **characterized in that** the first edge (5) of each first section bar means (3) has a width greater than the width of the respective second border (6) and it is coplanar to the latter.

4. Device according to claim 3 **characterized in that** the second edge (6) supports respective wall plates (2) by screw means.

5. Device according to claim 1 **characterized in that** the fixing means (7) have a plan approximately "U" shaped cross section.

6. Device according to claim 1 **characterized in that** the first blocking means (9) consist of female screws at the ends of the fixing means (7).

7. Device according to claim 1 **characterized in that** each fixing means (7) has abutment means (11) fit for mating at least an edge of the first section bar means (3).

8. Device according to claim 7 **characterized in that** each abutment means (11) consists of a fin folded perpendicularly to a plan defined by the fixing means (7).

9. Device according to claim 7 **characterized in that** the maximum distance between abutment means (11) and first blocking means (9) of fixing means (7) is approximately equal to half of the width of longitudinal opening (10) of first section bar means (3).

10. Device according to claim 7 **characterized in that** the mutual distance between the abutment means (11) of at least a fixing means (7) is approximately equal to the width of the longitudinal opening (10) of first section bar means (3).

11. Device according to claim 1 **characterized in that** at least one of the fixing means (7) has a seat (12) for an edge of a wall plate (2).

12. Device according to claim 11 **characterized in that** the seat (12) consists of a "L" folded portion of an edge of first lip means (8) turned toward the first blocking means (9).

13. Device according to claim 1 **characterized in that** it includes a plurality of second section bar means (13) having an elongated shape and a "C" cross section for containing and supporting the system connection elements (50).

14. Device according to claim 13 **characterized in that** it includes a plurality of joint means (20) having inner shape which approximately copies the external shape of respective section bar means (3, 13) and fit for the mutual connection of ends of these last ones.

15. Device according to claim 13 **characterized in that** includes a plurality of support means (14) each one for a set of second section bar means (13).

16. Device according to claim 15 **characterized in that** each support means (14) has a plurality of housings (15) for corresponding side portions of respective second section bar means (13).

17. Device according to claim 15 **characterized in that** at least an end of each support means (14) has connection means (16) for at least a respective end of at least a second section bar means (13).

18. Device according to claims 16 and 17 **characterized in that** the housings (15) and the connection means (16) include respective folded fin means (17) of the respective support means (14).

19. Device according to claim 18 **characterized in that** at least one of the fin means (17) has a cavity (18) for an edge of a second section bar means (13).

20. Device according to claim 17 **characterized in that** the connection means (16) include shoulder means (19) for mating an end of a second section bar means (13).

21. Device according to claim 13 **characterized in that** it includes linking elements (21) fit for mating ends of first (3) and second (13) section bar means.

22. Device according to claim 21 **characterized in that** the linking elements (21) include a first face (22) and a second face (23), the latter having at least a window (24) corresponding, in the assemblage condition (M), to a respective opening of plates (2); said faces (22, 23) being nearly parallel.

23. Device according to claim 22 **characterized in that** the first face (22) and the second face (23) have a plurality of protrusions (25) for mating respective portions of the ends of first (3) and second (13) section bar means.

24. Device according to claim 22 **characterized in that** the second face (23) has a plurality of second blocking means (26) fit for fixing cover means of the window (24).

25. Device according to claim 24 **characterized in that** each cover means has, on an inner face, an arrangement for data regarding at least the position of first section bar means (3) with respect to the related linking element (21).

26. Device according to claim 22 **characterized in that** the linking elements (21) include a plurality of separation means (30), fixed to the first (22) and second (23) faces for mutually fixing said faces and for separating the paths of connection elements (50).

27. Device according to claim 13 **characterized in that** the second section bar means (13) include respective set of deviation means (27) including at least a narrow portion (28) and two respective union portions (29).

## Patentansprüche

1. Stützanordnung eines technologischen Systems umfassend Wände, die wenigstens eine Plattenschicht (2) bereitstellen,
- ein Balkenmittel (3) eines ersten Abschnitts, das eine verlängerte Form hat, jedes einzelne enthält ein erstes Element (4) mit "C"-förmigen Querschnitt, dessen Kanten einen ersten (5) und einen zweiten (6) gefalteten Rand haben, der eine längs laufende Öffnung (10) des Balkenmittels (3) des ersten Abschnitts definiert, wobei die Anordnung **dadurch gekennzeichnet ist, dass** sie weiterhin umfasst:
- ein Befestigungsmittel (7), das jeweils mit zumindest einer ersten Lippe (8) und einem ersten Verriegelungsmittel (9) ausgestattet ist, wobei
im montierten Zustand (M) der Anordnung (1) das Balkenmittel (3) des ersten Abschnitts Verbindungselemente (50) des technologischen Systems enthält und unterstützt durch entsprechende erste Elemente (4), deren zumindest einer Rand (5, 6) die Platten (2) der Wandschicht unterstützt,
die erste Lippe (8) des Befestigungsmittels (7) ist zwischengeordnet zwischen mindestens einem gefalteten Rand (5, 6) des Balkenmittels (3) des ersten Abschnitts (3) und den Platten (2) und
das erste Verriegelungsmittel (9) fixiert Verbindungsmittel (51) des technologischen Systems an den entsprechenden Öffnungen der Wandschicht und an den länglichen Öffnungen (10) des Balkenmittels (3) des ersten Abschnitts.

2. Anordnung gemäß Anspruch 1 **dadurch gekennzeichnet, dass** der erste Rand (5) jedes Balkenmittels (3) des ersten Abschnitts in Richtung des entsprechenden zweiten Randes (6) gebogen ist und der letztere in die entgegengesetzte Richtung gebogen ist.

3. Anordnung gemäß Anspruch 1 oder 2 **dadurch gekennzeichnet, dass** der erste Rand (5) jedes Balkenmittels (3) des ersten Abschnitts eine Breite größer als die Breite des entsprechenden zweiten Randes (6) hat und er planparallel zu letzterem angeordnet ist.

4. Anordnung gemäß Anspruch 3 **dadurch gekennzeichnet, dass** der zweite Rand (6) die entsprechenden Wandplatten (2) durch Verschraubungsmittel stützt.

5. Anordnung gemäß Anspruch 1 **dadurch gekennzeichnet, dass** das Befestigungsmittel (7) eine Fläche mit annähernd "U"-förmigem Querschnitt aufweist.

6. Anordnung gemäß Anspruch 1 **dadurch gekennzeichnet, dass** das Verriegelungsmittel (9) aus Schraubenmuttern am Ende des Befestigungsmittels (7) besteht.

7. Anordnung gemäß Anspruch 1 **dadurch gekennzeichnet, dass** jedes Befestigungsmittel (7) ein Anlagemittel (11) aufweist, welches passend ist für zumindest einen Rand des Balkenmittels (3) des ersten Abschnitts.

8. Anordnung gemäß Anspruch 7 **dadurch gekennzeichnet, dass** jedes Anlagemittel (11) aus einem gefalteten Grat besteht, der senkrecht zu einer Fläche steht, die definiert ist durch das Befestigungsmittel (7).

9. Anordnung gemäß Anspruch 7 **dadurch gekennzeichnet, dass** der maximale Abstand zwischen dem Anlagemittel (11) und dem ersten Verriegelungsmittel (9) des Befestigungsmittels (7) ungefähr gleich der Hälfte der Breite der länglichen Öffnung (10) des Balkenmittels (3) des ersten Abschnitts ist.

10. Anordnung gemäß Anspruch 7 **dadurch gekennzeichnet, dass** der beidseitige Abstand zwischen dem Anlagemittel (11) von zumindest einem Befestigungsmittel (7) ungefähr der Breite der länglichen Öffnung (10) des Balkenmittels (3) des ersten Abschnitts entspricht.

11. Anordnung gemäß Anspruch 1 **dadurch gekennzeichnet, dass** zumindest ein Befestigungsmittel (7) einen Sitz (12) für eine Kante der Wandplatte (2) besitzt.

12. Anordnung gemäß Anspruch 11 **dadurch gekennzeichnet, dass** der Sitz (12) aus einem "L"-förmig gefalteten Bereich eines Randes der ersten Lippe (8) besteht, die gegen das erste Verriegelungsmittel (9) gedreht ist.

13. Anordnung gemäß Anspruch 1 **dadurch gekennzeichnet, dass** sie eine Mehrzahl von Balkenmitteln (13) eines zweiten Abschnitts aufweist, die eine verlängerte Form und einen "C"-förmigen Querschnitt haben, um die Systemverbindungselemente (50) aufzunehmen und zu stützen.

14. Anordnung gemäß Anspruch 13 **dadurch gekennzeichnet, dass** sie eine Mehrzahl von Anschlussmitteln (20) mit einer inneren Form aufweist, die annähernd die äußere Form des entsprechenden Balkenmittels (3, 13) der Abschnitte kopiert und angepasst ist für die gegenseitige Verbindung der Enden der letzteren.

15. Anordnung gemäß Anspruch 13 **dadurch gekennzeichnet, dass** sie eine Mehrzahl von Unterstützungsmitteln (14) jeweils für einen Satz von Balkenmitteln des zweiten Abschnitts (13) aufweist.

16. Anordnung gemäß Anspruch 15 **dadurch gekennzeichnet, dass** jedes Unterstützungsmittel (14) eine Mehrzahl von Gehäusen (15) für Seitenteile des entsprechenden Balkenmittels (13) des zweiten Abschnitts umfasst.

17. Anordnung gemäß Anspruch 15 **dadurch gekennzeichnet, dass** zumindest ein Ende jedes Unterstützungsmittels (14) ein Verbindungsmittel (16) für mindestens ein entsprechendes Ende von mindestens einem Balkenmittel (13) des zweiten Abschnitts aufweist.

18. Anordnung gemäß Anspruch 16 und 17 **dadurch gekennzeichnet, dass** die Gehäuse (15) und die Verbindungsmittel (16) entsprechend gefaltete Grate (17) der entsprechenden Unterstützungsmittel (14) aufweisen.

19. Anordnung gemäß Anspruch 18 **dadurch gekennzeichnet, dass** mindestens einer der Grate (17) eine Aussparung (18) für einen Rand des Balkenmittels (13) des zweiten Abschnitts aufweist.

20. Anordnung gemäß Anspruch 17 **dadurch gekennzeichnet, dass** die Verbindungsmittel (16) Leistenmittel (19) zum Zusammenfügen eines Endes des Balkenmittels (13) des zweiten Abschnitts umfassen.

21. Anordnung gemäß Anspruch 13 **dadurch gekennzeichnet, dass** sie Verbindungselemente (21) zum Zusammenfügen der Enden der Balkenmittel (3, 13) des ersten und zweiten Abschnitts aufweist.

22. Anordnung gemäß Anspruch 21 **dadurch gekennzeichnet, dass** die Verbindungselemente (21) eine erste Seite (22) und eine zweite Seite (23) aufweisen, wobei letztere mindestens eine Öffnung (24) aufweist, die sich im montierten Zustand (M) mit einer entsprechenden Öffnung der Platten (2) deckt, wobei die Seiten (22, 23) nahezu parallel sind.

23. Anordnung gemäß Anspruch 22 **dadurch gekennzeichnet, dass** die erste Seite (22) und die zweite Seite (23) eine Mehrzahl von Vorsprüngen (25) aufweist, um mit entsprechenden Bereichen der Enden des Balkenmittels (3, 13) des ersten und zweiten Abschnitts zusammen zupassen.

24. Anordnung gemäß Anspruch 22 **dadurch gekennzeichnet, dass** die zweite Seite (23) eine Mehrzahl von Verriegelungsmitteln (26) aufweist, die angepasst sind um Abdeckungsmittel der Öffnung (24) zu befestigen.

25. Anordnung gemäß Anspruch 24 **dadurch gekennzeichnet, dass** jedes Abdeckmittel an einer inneren Seite eine Anordnung für Daten in Bezug auf zumindest die Position des Balkenmittels (3) des ersten Abschnitts bezogen auf die zugehörigen Verbindungselemente (21) aufweist.

26. Anordnung gemäß Anspruch 22 **dadurch gekennzeichnet, dass** die Verbindungselemente (21) eine Mehrzahl von Trennmitteln (30) aufweisen, die an der ersten (22) und zweiten (23) Seite befestigt sind, um gegenseitig die besagten Seiten zu fixieren und um die Wege der Verbindungselemente (50) zu trennen.

27. Anordnung gemäß Anspruch 13 **dadurch gekennzeichnet, dass** das Balkenmittel (13) des zweiten Abschnitts einen entsprechenden Satz von Umleitungsmitteln (27) aufweist, die zumindest einen schmalen Bereich (28) und zwei entsprechende Anschlussteile (29) aufweisen.

## Revendications

1. Dispositif de support de systèmes technologiques comprenant des parois munies d'au moins une couche de plaques (2),
- des premiers moyens en acier profilé (3), ayant une forme allongée, chacun d'eux comprenant un premier élément (4) avec une coupe transversale en "C", dont les bords ont des première (5) et seconde (6) bordures repliées définissant une ouverture longitudinale (10) des premiers moyens en acier profilé (3) ; ledit dispositif étant **caractérisé en ce qu'**il comprend en outre :
- des moyens de fixation (7) dont chacun est pourvu d'au moins des premiers moyens à lèvres (8) et de premiers moyens de blocage (9) ;
dans un état assemblé (M) du dispositif (1), les premiers moyens en acier profilé (3) contiennent et supportent des éléments de raccordement (50) du système technologique par des premiers éléments respectifs (4), dont au moins une bordure (5, 6) supporte des plaques (2) de la couche de paroi, les premiers moyens à lèvres (8) des moyens de fixation (7) sont intercalés entre au moins un bord replié (5, 6) des premiers moyens en acier profilé (3) et lesdites plaques (2) et les premiers moyens de blocage (9) fixent des éléments d'interconnexion (51) de systèmes technologiques à des ouvertures respectives de la couche de paroi et à des ouvertures longitudinales (10) des premiers moyens en acier profilé (3).

2. Dispositif selon la revendication 1, **caractérisé en ce que** la première bordure (5) de chacun des premier moyens en acier profilé (3) est incurvée vers la seconde bordure respective (6) et cette dernière est incurvée dans le sens opposé.

3. Dispositif selon la revendication 1 ou la revendication 2, **caractérisé en ce que** le premier bord (5) de chaque premier moyen en acier profilé (3) a une largeur supérieure à la largeur de la seconde bordure respective (6) et est coplanaire avec cette dernière.

4. Dispositif selon la revendication 3, **caractérisé en ce que** le second bord (6) supporte des plaques de paroi respectives (2) par des moyens à vis.

5. Dispositif selon la revendication 1, **caractérisé en ce que** les moyens de fixation (7) ont une coupe transversale plane de forme approximative en "U".

6. Dispositif selon la revendication 1, **caractérisée en ce que** les premiers moyens de blocage (9) sont constitués de vis femelles aux extrémités des moyens de fixation (7).

7. Dispositif selon la revendication 1 **caractérisé en ce que** chaque moyen de fixation (7) a un moyen de butée (11) ajusté pour s'accoupler au moins sur un bord des premiers moyens en acier profilé (3).

8. Dispositif selon la revendication 7, **caractérisé en ce que** chaque moyen de butée (11) est constitué d'un aileron replié perpendiculairement à un plan défini par les moyens de fixation (7).

9. Dispositif selon la revendication 7, **caractérisé en ce que** la distance maximale entre les moyens de butée (11) et les premiers moyens de blocage (9) des moyens de fixation (7) est à peu près égale à la moitié de la largeur de l'ouverture longitudinale (10) des premiers moyens en acier profilé (3).

10. Dispositif selon la revendication 7, **caractérisé en ce que** la distance mutuelle entre les moyens de butée (11) d'au moins un moyen de fixation (7) est à peu près égale à la largeur de l'ouverture longitudinale (10) des premiers moyens en acier profilé (3).

11. Dispositif selon la revendication 1, **caractérisé en ce qu'**au moins l'un des moyens de fixation (7) a un siège (12) pour un bord d'une plaque de paroi (2).

12. Dispositif selon la revendication 11, **caractérisé en ce que** le siège (12) est constitué d'une portion repliée en "L" d'un bord des premiers moyens à lèvres (8) tournée vers les premiers moyens de blocage (9).

13. Dispositif selon la revendication 1, **caractérisé en ce qu'**il comprend une pluralité de seconds moyens en acier profilé (13) ayant une forme allongée et une coupe transversale en "C" pour contenir et supporter les éléments de raccordement de systèmes (50).

14. Dispositif selon la revendication 13, **caractérisé en ce qu'**il comprend une pluralité de moyens de jonction (20) ayant une forme interne qui copie à peu près la forme externe des moyens en acier profilé respectifs (3, 13) et ajustés pour raccorder mutuellement des extrémités de ces derniers.

15. Dispositif selon la revendication 13, **caractérisé en ce qu'**il comprend une pluralité de moyens de support (14), chacun pour un ensemble de seconds moyens en acier profilé (13).

16. Dispositif selon la revendication 15, **caractérisé en ce que** chaque moyen de support (14) a une pluralité de logements (15) pour des parties latérales correspondantes de seconds moyens en acier profilé respectifs (13).

17. Dispositif selon la revendication 15, **caractérisé en ce qu'**au moins une extrémité de chaque moyen de support (14) a des moyens de raccordement (16) pour au moins une extrémité respective d'au moins un second moyen en acier profilé (13).

18. Dispositif selon les revendications 16 et 17, **caractérisé en ce que** les logements (15) et les moyens de raccordement (16) comprennent des moyens à aileron replié respectifs(17) des moyens de support respectifs (14).

19. Dispositif selon la revendication 18, **caractérisé en ce qu'**au moins l'un des moyens à aileron (17) a une cavité (18) pour un bord d'un second moyen en acier profilé (13).

20. Dispositif selon la revendication 17, **caractérisé en ce que** les moyens de raccordement (16) comprennent des moyens d'épaulement (19) pour s'accoupler à une extrémité d'un second moyen en acier profilé (13).

21. Dispositif selon la revendication 13, **caractérisé en ce qu'**il comprend des éléments de liaison (21) ajustés pour s'accoupler à des extrémités des premiers (3) et seconds (13) moyens en acier profilé.

22. Dispositif selon la revendication 21, **caractérisé en ce que** les éléments de liaison (21) comprennent une première face (22) et une seconde face (23), cette dernière ayant au moins une fenêtre (24) correspondant, dans l'état d'assemblage (M), à une ouverture respective des plaques (2) ; lesdites faces (22, 23) étant presque parallèles.

23. Dispositif selon la revendication 22, **caractérisé en ce que** la première face (22) et la seconde face (23) ont une pluralité de saillies (25) pour s'accoupler à des parties respectives des extrémités des premiers (3) et seconds (13) moyens en acier profilé.

24. Dispositif selon la revendication 22, **caractérisé en ce que** la seconde face (23) a une pluralité de seconds moyens de blocage (26) ajustés pour fixer des moyens à couvercle de la fenêtre (24).

25. Dispositif selon la revendication 24, **caractérisé en ce que** chaque moyen à couvercle a, sur une face interne, un aménagement pour des données concernant au moins la position des premiers moyens en acier profilé (3) par rapport à l'élément de liaison concerné (21).

26. Dispositif selon la revendication 22, **caractérisé en ce que** les éléments de liaison (21) comprennent une pluralité de moyens de séparation (30), fixés aux première (22) et seconde (23) faces pour fixer mutuellement lesdites faces et séparer les trajets des éléments de raccordement (50).

27. Dispositif selon la revendication 13 **caractérisé en ce que** les seconds moyens en acier profilé (13) comprennent des ensembles respectifs de moyens de déviation (27) comprenant au moins une portion étroite (28) et deux portions de réunion respectives (29).
